# EUROPÄISCHE PATENTANMELDUNG

(11) **EP 2 570 058 A1**
(43) Veröffentlichungstag der Anmeldung: **20.03.2013**
(21) Anmeldenummer: 12184726.3
(22) Anmeldetag: 17.09.2012
(51) Int. Cl.: A47J 31/38, A47J 31/44

(54) **Espressomaschine**

(30) Priorität: 19.09.2011 DE 102011082963
(71) Anmelder: WMF WÜRTTEMBERGISCHE METALLWARENFABRIK AG, 73309 Geislingen/Steige (DE)
(72) Erfinder: Mayer, Roman, 71554 Weissach (DE)
(74) Vertreter: BRP Renaud & Partner

(57) **Zusammenfassung**

Die Erfindung betrifft eine Espressomaschine (1) mit einer Brühkammer (2), die zu einem Auffanggefäß (3) hin mittels eines Siebs/Siebträgers (4) verschlossen ist. Erfindungswesentlich ist dabei, dass in einer der Brühkammer (2) vorgeschalteten Wasserkammer (9) ein mittels eines Spindeltriebs (5) manuell verstellbarer Kolben (6) vorgesehen ist, mit dem während des Brühvorgangs der zur Erzeugung einer Crema erforderliche Druck in der Brühkammer (2) erzeugbar ist.

Hierdurch kann auch bei Espressomaschinen im unteren Preissegment die einfache Herstellung einer Crema erreicht werden, die zudem unabhängig von einer eigenen Energieversorgung ist

## Beschreibung

Die vorliegende Erfindung betrifft eine Espressomaschine mit einer Brühkammer, die zu einem Auffanggefäß hin beispielsweise mittels eines Siebs/Siebträgers/Pads/Padhalters/Kapsel-/-halters verschlossen ist gemäß dem Oberbegriff des Anspruchs 1.

Gattungsgemäße Espressomaschinen sind hinlänglich bekannt und finden auch bereits seit langer Zeit Anwendung im nicht gewerblichen Bereich. Um die beim Espresso besonders schmackhafte, da aus Ölen, Proteinen und Zuckerarten bestehende Crema erzeugen zu können, sind insbesondere die für den privaten Gebrauch bestimmten Espressomaschine mit einem Hebelmechanismus ausgestattet, der es erlaubt, den Druck in der Brühkammer während des Brühvorgangs deutlich zu erhöhen, beispielsweise auf ca. 9 bar, was Voraussetzung für die Erzeugung der Crema ist, da sich insbesondere bei diesem Druck das im Kaffeepulver enthaltene Kohlendioxid in Wasser löst und beim anschließenden Auslaufen wieder ausgasen kann, wodurch die Crema erzeugt wird. Nachteilig bei derartigen hebel betätigten Espressomaschinen ist jedoch der vergleichsweise große Platzbedarf.

Bei Espressomaschinen ohne einen derartigen Hebelmechanismus kann der zur Erzeugung der Crema erforderliche Brühdruck üblicherweise nicht erreicht werden, weshalb insbesondere billige Espressomaschinen über ein Ventil künstlich Crema erzeugen, was jedoch keinen Rückschluss auf die Röstung und Zubereitung zulässt. Diese künstlich erzeugte "falsche" Crema besteht aus mit Luft aufgeschäumtem Kaffee, wodurch sie nicht separat herausgeschmeckt werden kann, was jedoch aufgrund mangelnder Erfahrung den wenigsten Konsumenten negativ auffällt. Derart hergestellte Crema erkennt man an ihrer groben Bläschenstruktur, wogegen die Blasen echter Crema mit bloßem Auge kaum zu erkennen sind, da sich echte Crema nicht direkt beim Herauslaufen des Espresso aus der Maschine bildet, sondern in den Sekunden danach aus dem Espresso aufsteigt.

Die vorliegende Erfindung beschäftigt sich daher mit dem Problem, für eine Espressomaschine der gattungsgemäßen Art eine verbesserte oder zumindest eine alternative Ausführungsform anzugeben, die sich insbesondere durch eine einfache Herstellbarkeit hochwertiger Espressogetränke mit Crema auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht dabei auf dem allgemeinen Gedanken, den zur Erzeugung der wohlschmeckenden Crema erforderlichen Brühdruck mittels einem über einen Spindeltrieb manuell verstellbaren Kolben zu erzeugen, der deutlich platzsparender konstruiert ist und dadurch auch einen deutlich geringeren Bauraumbedarf erfordert. Die erfindungsgemäße Espressomaschine weist dabei in bekannter Weise eine Brühkammer auf, die zu einem Auffanggefäß hin, beispielsweise zu einer Espressotasse hin, insbesondere mittels eines Siebs/Siebträgers oder eines Pads/Padhalters oder einer Kapsel bzw. einer Kapselhalters verschlossen bzw. verschließbar ist. In einer der Brühkammer vorgeschalteten Wasserkammer ist dabei erfindungsgemäß der mittels des Spindeltriebs verstellbare Kolben angeordnet, wobei die Spindel des Spindeltriebs an ihrem dem Kolben abgewandten Ende mit einem Hebel oder einem Handrad drehfest verbunden und dadurch einfach zu verdrehen ist. Die Spindel ist bei einer bevorzugten Ausführungsform im Wesentlichen horizontal angeordnet, wogegen der Hebel bzw. das Handrad üblicherweise senkrecht angeordnet sind. Mit der erfindungsgemäßen Espressomaschine ist es somit möglich, den zur Erzeugung einer "echten" Crema erforderlichen hohen Brühdruck von zumindest 9 bar einerseits platzsparend und andererseits preisgünstig, das heißt insbesondere auch für Espressomaschinen im Privatbereich, anzubieten. Der Spindeltrieb garantiert dabei, dass der für die Erzeugung der Crema erforderliche Brühdruck mit wenig Kraft und dadurch komfortabel erzeugt werden kann, so dass die Bedienung der erfindungsgemäßen Espressomaschine generell von jeder Mann bzw. jeder Frau möglich ist. Im Vergleich zu dem aus dem Stand der Technik bekannten Hebelmechanismus, weist der erfindungsgemäße Spindeltrieb eine deutlich kompaktere Bauform auf, wodurch die erfindungsgemäße Espressomaschine im Vergleich zu den bekannten Espressomaschinen zudem einen deutlich geringeren Bauraumbedarf aufweist. Zudem ist auch ein Verletzungsrisiko im Vergleich zu herkömmlichen Handhebelmaschinen reduziert. Bei diesen kann nämlich je nach Bauart das nach oben Drücken des Hebels ohne montierten Siebträger zu einer schlagartigen Hebelbewegung führen.

Bei einer vorteilhaften Weiterbildung der erfindungsgemäßen Lösung ist ein mit Wasser befüllbarer und beheizbarer Tank vorgesehen, der über einen Wasserpfad mit der Wasserkammer und über diese mit der Brühkammer verbunden ist. Im Wasserpfad ist dabei ein erstes Rückschlagventil angeordnet. Der Wasserpfad mündet dabei vorzugsweise seitlich in die Wasserkammer und kann je nach Stellung des Kolbens von diesem verschlossen bzw. freigegeben werden. Zu Beginn ist dabei der Tank mit Wasser befüllt und der mit Espressopulver befüllte Siebträger/Pad unterhalb der Brühkammer montiert. Der sich in der Wasserkammer befindliche Kolben befindet sich dann üblicherweise in seiner Ausgangsposition, in welcher er den Wasserpfad noch verschließt. Zusätzlich kann in diesem Zustand der Wasserpfad von einem dort angeordneten ersten Rückschlagventil verschlossen sein. Durch das Beheizen des Tanks und des darin gespeicherten Wassers wird Dampf erzeugt, der aufgrund des durch den Kolben versperrten Wasserpfads oder eines im Wasserpfad angeordneten ersten Rückschlagventils ausschließlich über einen Dampfpfad zum Tassenpodest hin entweichen kann. Dabei kann der heiße Wasserdampf beispielsweise zum Erwärmen der Espressotassen verwendet werden und signalisiert gleichzeitig, dass nun mit der eigentlichen Espressozubereitung begonnen werden kann. Über den Dampfpfad ist ein druckloses Entweichen des Dampfes möglich, so dass sich im Tank kein Druck aufbaut. Selbstverständlich kann in dem Dampfpfad auch ein Absperrorgan, beispielsweise ein Ventil, angeordnet sein, um ein ständiges Austreten von Dampf und ein ständiges Beheizen des Tassenpodests unterbinden zu können. Hierdurch könnte beispielsweise ein Druckaufbau erfolgen, der dann zum Spülen der Brüheinheit oder zu Reinigungszwecken genutzt werden kann. In diesem Fall sollte der Tank dann jedoch zusätzlich ein Sicherheitsventil aufweisen. Um den Brühvorgang zu starten, wird der Kolben über eine Drehbewegung der Spindel verstellt, wodurch er den Wasserpfad freigibt. Das im Wasserpfad angeordnete erste Rückschlagventil weist dabei üblicherweise einen geringen Öffnungsdruck auf, so dass durch das Zurückfahren des Kolbens in der Wasserkammer ein Unterdruck erzeugt werden kann, der zu einem Ansaugen von Wasser aus dem Tank führt. Der Kolben kann dabei je nach Kaffeebedarf in verschiedene Stellungen verstellt werden, an welchen beispielsweise entsprechende Markierungen angebracht sind, so dass denkbar ist, dass eine Espressotasse ein Verstellen des Kolbens bis zur halben Hubhöhe erfordert, während das Herstellen von zwei Tassen Espresso das Verstellen des Kolbens über die gesamte Hubhöhe erfordert. Durch die gewählte Hubhöhe des Kolbens kann somit indirekt die Kaffeemenge beeinflusst werden. Nach dem Befüllen der Wasserkammer mit heißem Wasser aus dem Wasserpfad wird durch ein Verdrehen des Hebels bzw. des Handrades in die entgegengesetzte Richtung der Kolben über den Spindeltrieb in die Wasserkammer hineingedrückt, wodurch der Kolben das Wasser in der Brühkammer durch das Kaffeepulver und das Sieb hindurch in die Espressotasse drückt. Ein unbeabsichtigtes Rückfließen des Wassers aus der Wasserkammer über den Wasserpfad in den Tank wird durch das im Wasserpfad angeordnete erste Rückschlagventil verhindert. Ist der Kolben über den Spindeltrieb bis zu seinem Anschlag verstellt, verschließt er den Wasserpfad, so dass nunmehr der gepresste Kaffeemehlkuchen zusammen mit dem Siebträger gefahrlos entfernt werden kann. Zwischen der Brühkammer und der Wasserkammer kann selbstverständlich noch ein zweites Rückschlagventil angeordnet sein, das ein Ansaugen der Luft verhindert. Außerdem sorgt dieses zweite Rückschlagventil dafür, dass nach der Kaffeezubereitung mit montiertem Siebträger kein Kaffeewasser bei Herausdrehen des Kolbens in die Wasserkammer gelangt und diese verunreinigt.

Mit der erfindungsgemäßen Espressomaschine kann somit auch im Bereich eines günstigen Preissegments der für die Herstellung der "echten" Crema erforderliche Brühdruck erzeugt werden, wobei der erfindungsgemäße Spindeltrieb einerseits einen geringen Platzbedarf und andererseits einen geringen Kraftaufwand erfordert. Durch den mittels Muskelkraft erzeugten Druck ist die erfindungsgemäße Espressomaschine auch besonders energiesparend und dadurch umweltfreundlich ausgestaltet, was wiederum einen nicht zu unterschätzenden Vorteil darstellt. Zudem ist die erfindungsgemäße Espressomaschine auch verschließarm, da auf eine Pumpe verzichtet werden kann.

Bei einer weiteren vorteilhaften Ausführungsform der erfindungsgemäßen Lösung ist oberhalb des Tanks ein Tassenpodest angeordnet, das wärmeübertragend mit dem darunter angeordneten Tank verbunden oder separat beheizbar ist. Ein Erwärmen der Espressotasse vor dem Befüllen mit dem eigentlichen Espresso kann dabei über heißen Wasserdampf aus dem Dampfpfad erfolgen. Das Tassenpodest weist hierzu zwei nach oben gerichtete Löcher auf, über die der Dampf entweichen kann. Um die Espressotassen/ Tassen vorzuwärmen, werden diese umgedreht auf eine Abstellfläche des Tassenpodests gestellt. Der Dampf entweicht dabei zu großen Teilen durch die beiden Löcher und wärmt dadurch die Tassen auf. Dabei sind die Löcher so ausgerichtet, dass diese sowohl durch zwei Tassen, als auch durch eine mittig gestellte Tasse freigegeben bzw. verschlossen werden können. Im Anschluss an das Aufwärmen können die Tassen umgedreht und von unten weiter erwärmt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch eine erfindungsgemäße Espressomaschine beim Einsetzen eines Siebträgers,
- Fig. 2: eine Schnittdarstellung durch die Espressomaschine beim Befüllen der Wasserkammer,
- Fig. 3: eine Schnittdarstellung durch die Espressomaschine bei befüllter Wasserkammer,
- Fig. 4: eine Schnittdarstellung durch die Espressomaschine beim Brühen des Espressos,
- Fig. 5: eine Schnittdarstellung durch die Espressomaschine nach Beendigung des Brühvorgangs,
- Fig. 6: eine Schnittdarstellung durch eine weitere erfindungsgemäße Espressomaschine,
- Fig. 7: eine Ansicht auf die erfindungsgemäße Espressomaschine bei unterschiedlichen Kolbenstellungen,
- Fig. 8: eine mögliche Ausführungsform eines Tassenpodests,
- Fig. 9: eine Schnittdarstellung durch die Espressomaschine im Bereich des Tassenpodests,
- Fig. 10: eine Schnittdarstellung durch eine erfindungsgemäße Espressomaschine beim Erwärmen einer Espressotasse,
- Fig. 11: eine Schnittdarstellung durch die Espressomaschine beim Befüllen der Wasserkammer,
- Fig. 12: eine Schnittdarstellung durch die Espressomaschine beim Brühen des Espressos,
- Fig. 13: eine Schnittdarstellung durch die Espressomaschine nach Beendigung des Brühvorgangs.

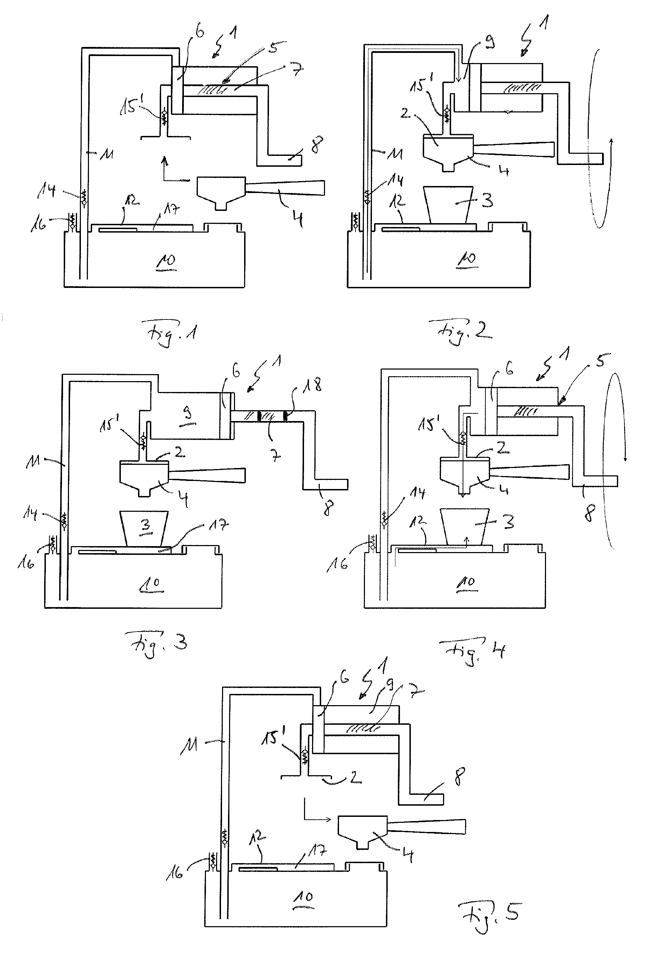

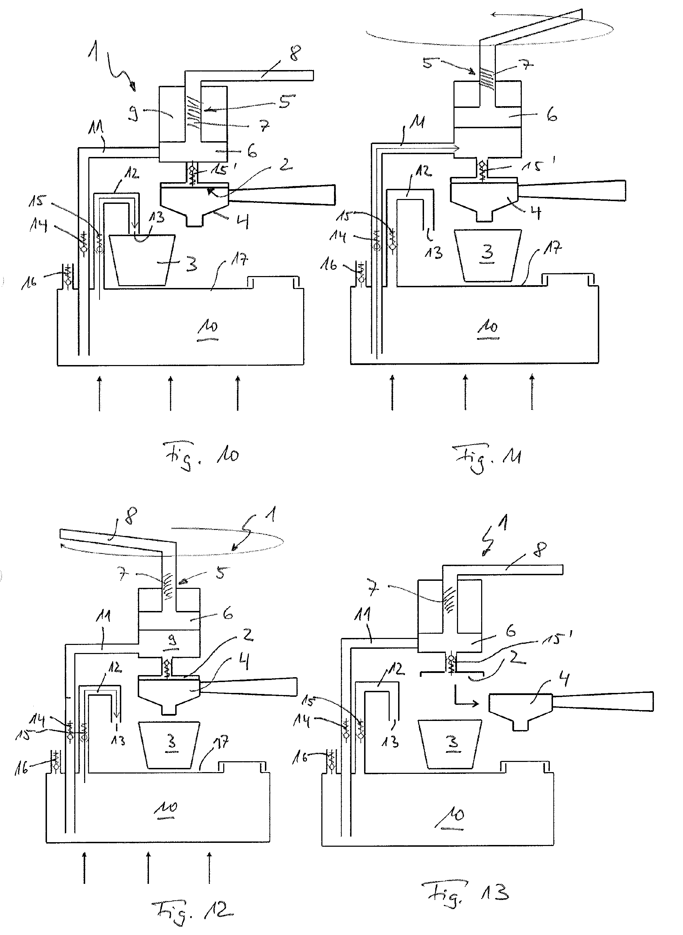

Entsprechend den Figuren 1-13, weist eine erfindungsgemäße Espressomaschine 1 eine Brühkammer 2 auf, die zu einem Auffanggefäß 3 hin, beispielsweise zu einer Espressotasse, mittels eines Siebs/Siebträgers 4 oder mittels eine Pads/Padträgers oder einer Kapsel bzw. eines Kapselträgers verschlossen ist. Auch wenn im Folgenden oftmals nur von einem Sieb/Siebträger 4 gesprochen wird, so ist selbstverständlich klar, dass alternativ dazu auch ein Pad/Padhalter/Kapsel-/-halter vorgesehen sein kann. Die genannten Komponenten stehen dabei stellvertretend für eine Verschlusseinrichtung. Erfindungsgemäß ist nun in einer der Brühkammer 2vorgeschalteten Wasserkammer 9 ein mittels eines Spindeltriebs 5 verstellbarer Kolben 6 angeordnet, mit dem während des Brühvorgangs der zur Erzeugung einer echten Crema erforderliche Druck herstellbar ist. Der zur Erzeugung der Crema erforderliche Druck beträgt dabei zumindest 7 bar, vorzugsweise aber zumindest 9 bar. Zum Verstellen des Kolbens 6 ist eine Spindel 7 des Spindeltriebs 5 an ihren dem Kolben 6 abgewandten Ende mit einem Hebel 8 oder einem Handrad verbunden, wobei die Spindel 7 im Wesentlichen horizontal (vgl. Fig. 1-7) und der Hebel 8 bzw. das Handrad im Wesentlichen vertikal angeordnet sind. Alternativ können die Spindel 7 und damit auch der Kolben 6 auch im Wesentlichen vertikal und der Hebel 8 bzw. das Handrad im Wesentlichen horizontal, das heißt waagerecht, angeordnet sein (vgl. Fig. 10-13).

Die nachstehenden Ausführungen beziehen sich vorzugsweise auf eine erfindungsgemäße Espressomaschine 1 gemäß den Fig. 1 bis 9.

Die Espressomaschine 1 weist einen mit Wasser befüllbaren und beheizbaren Tank 10 auf, der über einen Wasserpfad 11 mit der Wasserkammer 9 verbunden ist. Im Wasserpfad 11 ist dabei ein erstes Rückschlagventil 14 angeordnet, wogegen zwischen der Wasserkammer 9 und dem Sieb/Siebträger 4 ein zweites Rückschlagventil 15' angeordnet ist. Die beiden Rückschlagventile 14,15' besitzen dabei beide einen geringen Öffnungsdruck. Außerdem sorgt das zweite Rückschlagventil 15' dafür, dass nach der Kaffeezubereitung mit montiertem Siebträger 4 kein Kaffeewasser bei Herausdrehen des Kolbens 6 in die Wasserkammer 9 gelangt und diese verunreinigt.

Betrachtet man die Figuren 1-5, so kann man erkennen, dass der Wasserpfad 11 vorzugsweise seitlich in die Wasserkammer 9 mündet und je nach Stellung des Kolbens 6 von diesem verschlossen ist bzw. frei in die Wasserkammer 9 mündet. Am Tank 10 ist darüber hinaus optional ein Sicherheitsventil 16 in der Art eines Überdruckventils angeordnet. Oberhalb des Tanks 10 ist ein Tassenpodest 17 angeordnet, welches zur Erwärmung des Auffanggefäßes 3, das heißt der Espressotasse, mit heißem Dampf aus einem Dampfpfad 12 beaufschlagt werden kann (vgl. Fig. 4).

Ein Brühvorgang eines Espresso erfolgt dabei wie folgt:
Zu Beginn des Brühvorgangs wird der Tank 10 mit Wasser befüllt und der mit Kaffeepulver befüllte Siebträger 4 montiert. Anschließend wird das Wasser im Tank 10 mittels einer Heizeinrichtung beheizt, beispielsweise durch Aufstellen auf eine Herdplatte. Beim Aufheizen des Wassers im Tank 10 befindet sich der Kolben 6 in der gemäß der Fig. 1 gezeigten Stellung und verschließt dadurch den Wasserpfad 11. Dieser ist selbstverständlich ohnehin durch das erste Rückschlagventil 14 bis zu einem Öffnungsdruck desselben geschlossen. Der sich im Tank 10 bildende Dampf kann in diesem Fall ausschließlich über den Dampfpfad 12 und zum Tassenpodest 17 strömen und die dort abgestellte Tasse erwärmen. Um den Brühvorgang zu starten, wird der Kolben 6 über die Drehbewegung des Hebels 8 bzw. des Handrades über den Spindeltrieb 5 nach rechts verstellt und dadurch der Wasserpfad 11 geöffnet, das heißt kommunizierend mit der Wasserkammer 9 verbunden, wie dies gemäß den Figuren 2 und 3 dargestellt ist. Aufgrund der Verstellbewegung des Kolbens 6 in der Wasserkammer 9 wird in dieser ein Unterdruck erzeugt, der das Wasser aus dem Tank 10 über den Wasserpfad 11 ansaugt. Zwischen der Wasserkammer 9 und dem Sieb/Siebträger 4 ist dabei ein zweites Rückschlagventil 15', das ein Ansaugen von Luft beim Zurückziehen des Kolbens 6 verhindert. Der Kolben 6 wird dabei je nach gewünschter Kaffeemenge in eine bestimmte Stellung verstellt, so dass beispielsweise zur Herstellung einer einzigen Tasse Espresso der Kolben 6 nur bis zur halben Hubhöhe nach rechts geschraubt wird, wogegen er zur Herstellung von zwei Tassen Espresso über die gesamte Hubhöhe nach rechts verstellt wird. An der Spindel 7 angebrachte Markierungen 18 zeigen dabei die Kolbenstellung und den Füllstand in der Wasserkammer 9 an. Über den gewählten Hub des Kolbens 6 kann somit direkt Einfluss auf die gewünschte Kaffeemenge genommen werden.

Anschließend erfolgt ein Zurückverstellen des Kolbens 6 nach links durch ein Verdrehen des Hebels 8 bzw. des Handrades in die entgegengesetzte Richtung. Der Kolben 6 drückt dabei das in der Wasserkammer 9 gespeicherte Wasser in die Brühkammer 2 und dort durch das Kaffeepulver und das Sieb 4 hindurch in das Auffanggefäß 3. Ein Zurückdrücken des sich in der Wasserkammer 9 befindlichen Wassers in den Wasserpfad 11 wird durch das in diesem angeordnete erste Rückschlagventil 14 verhindert. Ist der Brühvorgang beendet, hat der Kolben 6 die gemäß der Fig. 5 gezeigte Stellung erreicht und verschließt in dieser wiederum den Wasserpfad 11. Am Ende des Brühvorgangs kann nun das Sieb 4 bzw. der Siebträger 4 entfernt werden.

Prinzipiell ist das Sicherheitsventil 16 nur für den Fall erforderlich, bei dem im Dampfpfad 12 ein weiteres Rückschlagventil 15 oder generell ein Absperrorgan angeordnet ist, da nur in diesem Fall ein Druckaufbau im Tank 10 erfolgt.

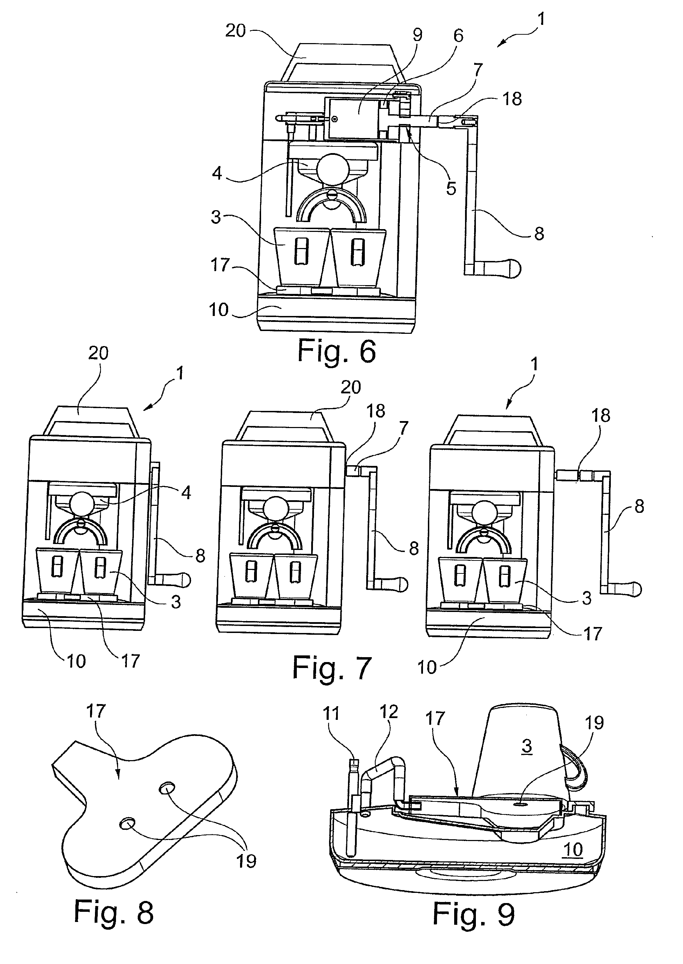

Gemäß den Fig. 6 bis 9 ist oberhalb des Tanks 10 das Tassenpodest 17 angeordnet, das über heißen Wasserdampf aus dem Dampfpfad 12 erwärmt werden kann. Das Tassenpodest 17 weist hierzu zwei nach oben gerichtete Löcher 19 auf, über die der Dampf entweichen kann. Um die Espressotassen/ Tassen, das heißt generell ein Auffanggefäß 3 vorzuwärmen, werden diese umgedreht auf eine Abstellfläche des Tassenpodests 17 gestellt. Der Dampf entweicht dabei zu großen Teilen durch die beiden Löcher 19 und wärmt dadurch die Tassen auf. Dabei sind die Löcher 19 so ausgerichtet, dass diese sowohl durch zwei Tassen, als auch durch eine mittig gestellte Tasse freigegeben bzw. verschlossen werden können. Im Anschluss an das Aufwärmen können die Tassen umgedreht und von unten weiter erwärmt werden. An einem Gehäuse der Espressomaschine 1 ist dabei ein Griff 20 angeordnet, um ein Gegenmoment aufbringen und eine Betätigung des Hebels 8 erleichtern zu können.

Die nachstehenden Ausführungen beziehen sich vorzugsweise auf eine erfindungsgemäße Espressomaschine 1 gemäß den Fig. 10 bis 13.

Im Unterschied zur Espressomaschine 1 gemäß den Fig. 1 bis 7 sind hierbei eine Spindel 7 des Spindeltriebs 5 im Wesentlichen vertikal und der Hebel 8 bzw. das Handrad im Wesentlichen horizontal, das heißt waagerecht, angeordnet. Der Tank 10 ist über den Wasserpfad 11 mit der Wasserkammer 9 und der Brühkammer 2 und über den Dampfpfad 12 mit einer Dampfausgabestelle 13 verbunden ist. Im Wasserpfad 11 ist das erste Rückschlagventil 14 angeordnet, wogegen im Dampfpfad 12 das zweite Rückschlagventil 15 angeordnet sein kann. Das erste Rückschlagventil 14 weist dabei einen geringeren Öffnungsdruck auf als das zweite Rückschlagventil 15, was im Folgenden noch näher erläutert wird.

Der Brühvorgang eines Espresso erfolgt dabei wie folgt:
Zu Beginn des Brühvorgangs wird der Tank 10 mit Wasser befüllt und der mit Kaffeepulver befüllte Siebträger 4 montiert. Anschließend wird das Wasser im Tank 10 erwärmt, wodurch der Druck im Tank 10 ansteigt. Beim Aufheizen des Wassers im Tank 10 befindet sich der Kolben 6 in der gemäß der Fig. 10 gezeigten Stellung und verschließt dadurch den Wasserpfad 11. Der sich im Tank 10 bildende Dampf kann in diesem Fall ausschließlich über den Dampfpfad 12 und
die Dampfausgabestelle 13 abgelassen werden und kann dadurch zur Erwärmung des Auffanggefäßes 3 genutzt werden. Tritt dabei genügend Dampf aus der Dampfausgabestelle 13 aus, so stellt dies gleichzeitig ein Signal dar, dass mit der eigentlichen Espressozubereitung begonnen werden kann. An der Dampfausgabestelle 13 kann selbstverständlich noch ein nicht gezeigter Absperrhahn angeordnet werden.

Um den Brühvorgang zu starten, wird der Kolben 6 über die Drehbewegung des Hebels 8 bzw. des Handrades über den Spindeltrieb 5 nach oben geschraubt und dadurch der Wasserpfad 11 geöffnet, das heißt kommunizierend mit der Wasserkammer 9 verbunden, wie dies gemäß der Figur 11 dargestellt ist. In diesem Stadium sperrt das zweite Rückschlagventil 15 ab, so dass ausschließlich Wasser aus dem Tank 10 nunmehr über den Wasserpfad 11 in die Wasserkammer 9 einströmen kann. Durch den Umstand, dass das zweite Rückschlagventil 15 einen höheren Öffnungsdruck aufweist als das erste Rückschlagventil 14 kann gewährleistet werden, dass in dem in der Fig. 11 gezeigten Zustand ausschließlich Wasser durch den Wasserpfad 11 in die Wasserkammer 9 geleitet wird. Der Kolben 6 wird dabei je nach gewünschter Kaffeemenge in eine bestimmte Höhe geschraubt, so dass beispielsweise zur Herstellung einer einzigen Tasse Espresso der Kolben 6 nur bis zur halben Hubhöhe nach oben geschraubt wird, wogegen er zur Herstellung von zwei Tassen Espresso über die gesamte Hubhöhe nach oben verstellt wird. Dabei ist auch eine Abhebehöhe des Hebels 8 bzw. des Handrades von der Espressomaschine 1 ein Indikator für den Füllstand in der Wasserkammer 9. Zwischen der Brühkammer 2 und der Wasserkammer 9 kann selbstverständlich noch ein zweites Rückschlagventil 15' angeordnet sein, das ein Ansaugen der Luft verhindert. Außerdem sorgt dieses zweite Rückschlagventil 15' dafür, dass nach der Kaffeezubereitung mit montiertem Siebträger 4 kein Kaffeewasser bei Herausdrehen des Kolbens 6 in die Wasserkammer 9 gelangt und diese verunreinigt.

Anschließend erfolgt ein Zurückverstellen des Kolbens 6 nach unten durch ein Verdrehen des Hebels 8 bzw. des Handrades in die entgegengesetzte Richtung. Der Kolben 6 drückt dabei das in der Wasserkammer 9 befindliche Wasser durch das Kaffeepulver und das Sieb 4 hindurch in das Auffanggefäß 3. Ein Zurückdrücken des sich in der Wasserkammer 9 befindlichen Wassers in den Wasserpfad 11 wird durch das in diesem angeordnete erste Rückschlagventil 14 verhindert. Ist der Brühvorgang beendet, hat der Kolben 6 die gemäß den Fig. 13 gezeigte Stellung erreicht und verschließt in dieser wiederum den Wasserpfad 11, so dass in dieser Stellung der noch im Tank 10 befindliche Überdruck ausschließlich über den Dampfpfad 12 bzw. das Sicherheitsventil 16 abgebaut werden kann.

Am Ende des Brühvorgangs kann nun das Sieb 4 bzw. der Siebträger 4 entfernt werden. Dabei ist anzumerken, dass auf das zweite Rückschlagventil 15 im Dampfbad 12 generell verzichtet werden kann, da durch das Hochschrauben des Kolbens 6 zugleich ein Unterdruck (insbesondere ein Vakuum) in der Wasserkammer 9 entsteht, welches sich automatisch mit Wasser über den Wasserpfad 11 auffüllt.

Mit der erfindungsgemäßen Espressomaschine 1 lässt sich eine echte Crema durch die Erzeugung des benötigten Drucks mechanisch vergleichsweise einfach herstellen und dadurch auch bei Espressomaschinen in niedrigeren Preissegmenten anbieten. Im Vergleich zu aus dem Stand der Technik bekannten Handhebelmaschinen weist die erfindungsgemäße Espressomaschine 1 zudem einen deutlich geringeren Platzbedarf sowie einen reduzierten Kraftaufwand zur Herstellung des Drucks auf, wodurch auch schwächeren Personen ein komfortables Herstellen von Espressogetränken mit Crema ermöglicht wird. Die zusätzliche Tassenwärmfunktion durch den beheizbaren Tassenpodest 17 stellt ebenfalls eine Komfortsteigerung dar. Die gewünschte Espressomenge kann darüber hinaus durch die individuell frei wählbare Stellung des Kolbens 6 gewählt werden. Zudem ist die erfindungsgemäße Espressomaschine 1 vergleichsweise umweltfreundlich, da der zur Herstellung der Crema erforderliche Druck in der Brühkammer 2 mit Muskelkraft und nicht beispielsweise elektrisch über eine entsprechende Pumpe erzeugt wird. Dies ermöglicht insbesondere auch einen Betrieb der erfindungsgemäßen Espressomaschine 1 unabhängig von einer Stromquelle, da diese generell zum Durchführen des Brühvorgangs einfach auf beispielsweise eine Herdplatte aufgesetzt werden kann, so dass die Herdplatte die Erwärmung des im Tank 10 befindlichen Wassers übernimmt. Die Unabhängigkeit von einer Stromquelle ermöglicht die Verwendung der erfindungsgemäßen Espressomaschine 1 insbesondere auch im Camping- oder Outdoorbereich. Zudem ist die Espressomaschine 1 unabhängig von einem jeweils lokal angebotenen Stromnetz und lässt sich dadurch flexibel in unterschiedlichsten Ländern mit unterschiedlichsten Spannungen oder Steckersystemen verwenden.

## Patentansprüche

1. Espressomaschine (1) mit einer Brühkammer (2), die zu einem Auffanggefäß (3) hin, beispielsweise mittels eines Siebs/Siebträgers (4), Pads/Padhalters/Kapsel-/-halters, verschlossen ist,
**dadurch gekennzeichnet,**
**dass** in einer der Brühkammer (2) vorgeschalteten Wasserkammer (9) ein mittels eines Spindeltriebs (5) manuell verstellbarer Kolben (6) vorgesehen ist, mit dem während des Brühvorgangs der zur Erzeugung einer Crema erforderliche Druck in der Brühkammer (2) erzeugbar ist.

2. Espressomaschine nach Anspruch 1,
**dadurch gekennzeichnet,**
- **dass** eine Spindel (7) des Spindeltriebs (5) an ihrem dem Kolben (6) abgewandten Ende mit einem Hebel (8) oder einem Handrad verbunden ist, wobei die Spindel (7) im Wesentlichen horizontal angeordnet ist, oder
- **dass** eine Spindel (7) des Spindeltriebs (5) an ihrem dem Kolben (6) abgewandten Ende mit einem Hebel (8) oder einem Handrad verbunden ist, wobei die Spindel (7) im Wesentlichen vertikal und der Hebel (8) horizontal angeordnet ist.

3. Espressomaschine nach Anspruch 1 oder 2,
**dadurch gekennzeichnet,**
**dass** ein mit Wasser befüllbarer und beheizbarer Tank (10) vorgesehen ist, der über einen Wasserpfad (11) mit der Wasserkammer (9) verbunden ist.

4. Espressomaschine nach Anspruch 3,
**dadurch gekennzeichnet,**
**dass** im Wasserpfad (11) ein erstes Rückschlagventil (14) und zwischen der Wasserkammer (9) und dem Sieb/Siebträger (4) ein zweites Rückschlagventil (15') angeordnet ist.

5. Espressomaschine nach Anspruch 3 oder 4,
**dadurch gekennzeichnet,**
**dass** oberhalb des Tanks (10) ein Tassenpodest (17) vorgesehen ist.

6. Espressomaschine nach einem der Ansprüche 3 bis 5,
**dadurch gekennzeichnet,**
**dass** der Wasserpfad (11) in die Wasserkammer (9) mündet, wobei der Kolben (6) je nach Stellung den Wasserpfad (11) verschließt oder freigibt.

7. Espressomaschine nach einem der Ansprüche 3 bis 6,
**dadurch gekennzeichnet,**
**dass** der Tank (10) ein Sicherheitsventil (16) aufweist.

8. Espressomaschine nach einem der Ansprüche 5 bis 7,
**dadurch gekennzeichnet,**
**dass** das Tassenpodest (17) wärmeübertragend mit dem darunter angeordneten Tank (10) verbunden oder mittels eines vom Tank (10) ausgehenden Dampfpfades (12) mit Dampf erwärmbar ist.

9. Espressomaschine nach einem der Ansprüche 1 bis 8,
**dadurch gekennzeichnet,**
**dass** mittels des über den Spindeltrieb (5) verstellbaren Kolbens (6) ein Druck von zumindest 7 bar, bevorzugt von zumindest 9 bar, in der Brühkammer (2) erzeugbar ist.
